# DEMANDE DE BREVET EUROPEEN

(11) **EP 2 515 277 A1**
(43) Date de publication de la demande: **24.10.2012**
(21) Numéro de dépôt: 11162988.7
(22) Date de dépôt: 19.04.2011
(51) Int. Cl.: G07C 1/22, G01V 8/22, G08B 13/184, G01V 8/14

(54) **Dispositif de contrôle du passage d'un concurrent dans une compétition sportive**

(71) Demandeur: Swiss Timing Ltd., 2606 Corgémont (CH)
(72) Inventeur: Tortora, Pierpasquale, 2000, Neuchâtel (CH); Zanetta, André, 2075, Wavre (CH)
(74) Mandataire: Giraud, Eric

(57) **Abrégé**

Le dispositif de contrôle du passage d'un concurrent dans une compétition sportive comprend une source de lumière (2) disposée dans une première chambre (8) d'un boîtier (10), et un capteur de lumière (3) disposé dans une seconde chambre (7) du boîtier. La source de lumière transmet un faisceau de lumière (Le) par l'intermédiaire d'une première grande lentille (18) placée à l'embouchure de la première chambre (8) en direction d'un rétro-réflecteur. Le capteur de lumière (3) reçoit par l'intermédiaire d'une seconde grande lentille (17) à l'embouchure de la seconde chambre (7), le faisceau de lumière (Lᵣ) réfléchi sur le rétro-réflecteur. La lumière captée par le capteur de lumière est converti en un signal électrique, qui varie lors du passage du concurrent entre le capteur de lumière et le rétro-réflecteur. Le dispositif de contrôle comprend encore un filtre optique sous la forme d'une plaque à trou (5) placée à proximité du capteur de lumière. Le trou (6) de la plaque à trou est disposé en regard d'une partie d'une surface de photo-réception du capteur de lumière pour ne laisser passer que le faisceau de lumière réfléchi sur le rétro-réflecteur. Toute lumière parasite diffusée ou réfléchie par un objet diffusant ou réfléchissant à proximité du boîtier n'est ainsi pas captée par le capteur de lumière.

## Description

L'invention concerne un dispositif de contrôle du passage d'un concurrent dans une compétition sportive. Le dispositif est du type réflex avec émission d'un faisceau de lumière d'une source de lumière d'un boîtier, qui est susceptible d'être réfléchi par un rétro-réflecteur à distance, et réception du faisceau de lumière réfléchi par un capteur photovoltaïque par exemple dans le même boîtier.

Habituellement pour la mesure d'un temps de passage d'un compétiteur lors d'une course, telle qu'une course de ski, le dispositif de contrôle comprend au moins une source de lumière et un capteur de lumière. La source de lumière peut être disposée dans le même boîtier que le capteur de lumière. Dans ces conditions, la source de lumière transmet un faisceau de lumière mis en forme à travers une lentille à l'embouchure du boîtier, en direction d'un rétro-réflecteur disposé à distance du boîtier. Le capteur de lumière dans le boîtier est ainsi en mesure de capter le faisceau de lumière réfléchi sur le rétro-réflecteur et mis en forme à travers une autre lentille à l'embouchure du boîtier. Le faisceau de lumière capté par le capteur de lumière est converti en un signal électrique. Lors du passage d'un compétiteur pour déterminer notamment un temps intermédiaire, le faisceau de lumière est momentanément interrompu et ainsi non capté par le capteur de lumière. Le signal électrique de contrôle fourni par le capteur de lumière est ainsi modifié et peut être traité par une unité de traitement pour signaler le passage du compétiteur en un point déterminé du parcours de la course.

Le dispositif de contrôle, qui peut être placé sur le parcours de course pour déterminer par exemple un temps intermédiaire ou un temps final, peut être influencé par la présence d'un objet diffusant ou réfléchissant à proximité du capteur de lumière. Cet objet diffusant ou réfléchissant peut également être le compétiteur muni d'une combinaison susceptible de réfléchir le faisceau lumineux. L'objet diffusant ou réfléchissant peut donc réfléchir une partie du faisceau de lumière généré par la source de lumière, et être capté par le capteur de lumière, tel qu'une cellule photovoltaïque. La lumière provenant de l'objet réfléchissant et captée par la cellule photovoltaïque peut être comparable à la lumière réfléchie sur le retro-réflecteur. Dans ces conditions, la cellule photovoltaïque n'est pas en mesure de détecter correctement le passage d'un concurrent entre le boîtier et le rétro-réflecteur pour signaler son temps de passage, ce qui constitue un inconvénient d'un tel dispositif de contrôle.

On peut citer le document de brevet US 4,186,388, qui décrit un dispositif à détecteur de proximité utilisé par exemple pour déterminer un temps de passage d'un concurrent dans une compétition sportive, telle que de l'athlétisme. Un faisceau de lumière est transmis par une source de lumière disposée dans un premier boîtier du dispositif. Ce faisceau de lumière est dirigé en direction d'un détecteur de proximité, qui est une cellule photovoltaïque disposée dans un second boîtier à distance du premier boîtier. Un filtre optique peut être prévu juste devant ladite cellule. Quand un compétiteur passe entre les deux boîtiers, le faisceau de lumière généré par la source de lumière n'est plus capté momentanément par ladite cellule photovoltaïque, ce qui a pour effet de générer un signal de contrôle du passage du compétiteur. Rien n'est par contre prévu pour éviter toute détection d'un objet diffusant de la lumière à proximité de la cellule photovoltaïque. De ce fait, cela peut empêcher la détection du passage du compétiteur entre les deux boîtiers du dispositif, ce qui est un inconvénient.

L'invention a donc pour but de pallier aux inconvénients de l'état de la technique susmentionné en proposant un dispositif de contrôle du passage d'un concurrent dans une compétition sportive adapté pour éviter de capter toute lumière diffusée ou réfléchie parasite de manière simple.

A cet effet, l'invention concerne un dispositif de contrôle du passage d'un concurrent dans une compétition sportive, qui comprend les caractéristiques définies dans la revendication indépendante 1.

Des formes d'exécution particulières du dispositif de contrôle du passage d'un concurrent sont définies dans les revendications dépendantes 2 à 15.

Un avantage du dispositif de contrôle réside dans le fait que le filtre optique sous la forme d'une plaque opaque munie d'un trou de dimension adaptée permet au capteur de lumière d'éviter de capter de la lumière diffuse ou réfléchie par un objet diffusant ou réfléchissant, qui peut se trouver à proximité du boîtier du dispositif de contrôle. Grâce à l'utilisation de ce filtre optique, il n'y a pas d'augmentation substantielle des coûts de réalisation d'un tel dispositif de contrôle et également pas d'augmentation de complexité de toute l'électronique de traitement des signaux électriques de contrôle.

Les buts, avantages et caractéristiques du dispositif de contrôle du passage d'un concurrent dans une compétition sportive selon l'invention apparaîtront mieux dans la description suivante d'au moins une forme d'exécution non limitative illustrée par les dessins sur lesquels :
la figure 1 représente schématiquement un dispositif de contrôle du passage d'un concurrent selon l'invention, qui est disposé en un point déterminé du parcours de la compétition sportive, et
la figure 2 représente une coupe transversale du boîtier avec les différents composants du dispositif de contrôle du passage d'un concurrent selon l'invention.

Dans la description suivante, tous les éléments du dispositif de contrôle du passage d'un concurrent, qui sont bien connus de l'homme du métier dans ce domaine technique, ne seront relatés que de manière simplifiée.

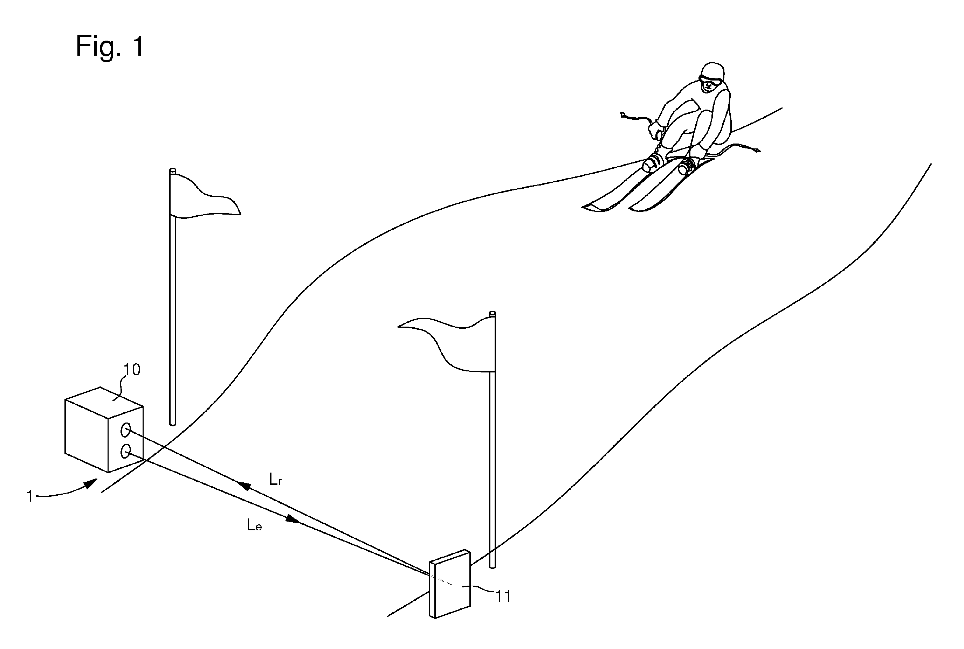

La figure 1 représente de manière simplifiée un dispositif de contrôle 1 du passage d'un concurrent dans une compétition sportive. Le dispositif de contrôle 1 peut être utilisé pour une course de ski, afin de déterminer par exemple un temps intermédiaire d'un skieur, comme représenté. Cependant, ce dispositif de contrôle du type réflex peut également être disposé à la ligne d'arrivée de la course pour déterminer le temps final de la course du skieur, ou également pour un autre type de compétition.

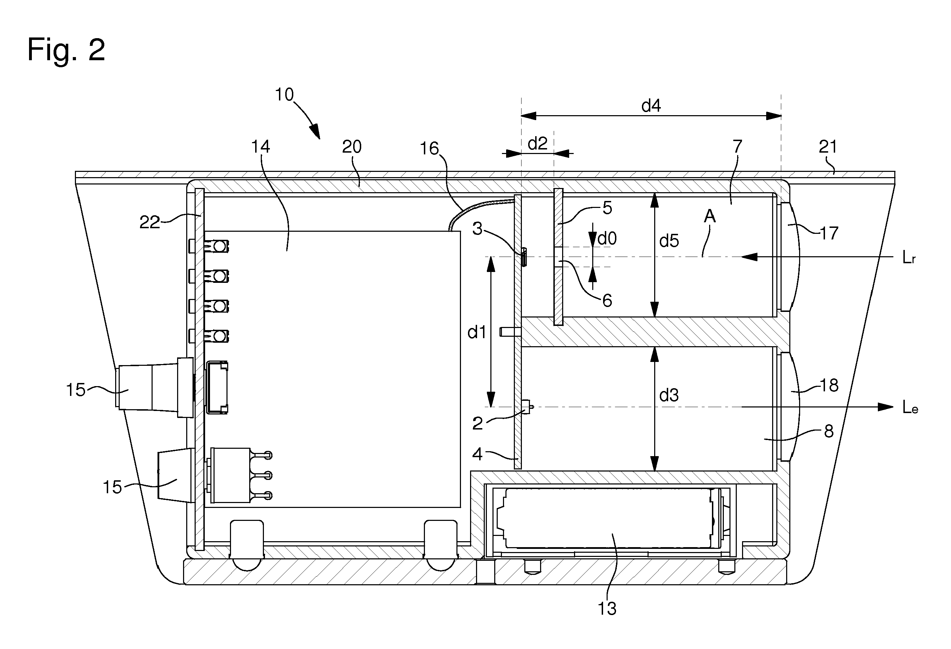

Le dispositif de contrôle 1 comprend essentiellement un boîtier 10 dans lequel sont disposés une source de lumière et un capteur de lumière dans deux chambres séparées comme expliqué ci-après en référence à la figure 2, et un rétro-réflecteur 11 disposé à distance du boîtier 10. Généralement le rétro-réflecteur peut être disposé jusqu'à une distance de l'ordre de 30 m du boîtier 10 du dispositif de contrôle.

Lors du fonctionnement du dispositif de contrôle 1, la source de lumière, qui peut être une diode électroluminescente ou une diode laser, transmet un faisceau de lumière Le, par exemple un faisceau de lumière infrarouge. Ce faisceau de lumière Le passe à travers une première grande lentille à l'embouchure d'une première chambre du boîtier pour être dirigé en direction du rétro-réflecteur 11. Ce rétro-réflecteur a pour but de réfléchir le faisceau de lumière reçu Le et renvoyer le faisceau de lumière réfléchi Lᵣ en direction du boîtier 10. S'il n'y a pas d'obstacle sur le trajet du faisceau de lumière transmis et réfléchi, le faisceau de lumière réfléchi Lᵣ passe à travers une seconde grande lentille à l'embouchure d'une seconde chambre du boîtier 10, pour être capté par le capteur de lumière.

Le capteur de lumière est une cellule photovoltaïque susceptible de convertir la lumière captée en un signal électrique. Le passage d'un concurrent entre le boîtier 10 et le rétro-réflecteur 11 a pour effet d'interrompre momentanément le faisceau de lumière normalement capté par le capteur de lumière. Cette interruption de lumière est signalée à une unité de traitement dans le signal électrique de contrôle du passage du capteur de lumière. De manière à ne capter que la lumière du faisceau de lumière réfléchi sur le rétro-réflecteur 11 et non pas de la lumière diffuse ou réfléchie par un objet diffusant ou réfléchissant, il est prévu un filtre optique devant le capteur de lumière. Ce filtre optique est uniquement une plaque opaque avec un trou adapté pour laisser passer principalement le faisceau de lumière réfléchi sur le rétro-réflecteur 11. La lumière ne passe que par le trou de ladite plaque pour être captée par le capteur de lumière. Grâce à ce type de filtre optique de conception simple, il est ainsi possible d'éviter de capter toute lumière parasite diffusée ou réfléchie par un objet diffusant ou réfléchissant à proximité du boîtier 10.

La figure 2 représente une coupe transversale longitudinale à travers le boîtier 10 de la partie principale du dispositif de contrôle du passage d'un concurrent selon l'invention. Le boîtier comprend une structure principale 20, qui enferme tous les composants principaux du dispositif, et une portion de couverture 21 entourant toute la surface longitudinale extérieure de la structure principale. La structure principale 20 et la portion de couverture 21 peuvent être réalisées dans un matériau rigide, tel que du plastique ou du métal. Le dispositif de contrôle du passage comprend principalement dans la structure principale du boîtier, une source de lumière 2 et un capteur de lumière 3. La source de lumière 2 est disposée dans une première chambre 8, alors que le capteur de lumière 3 est disposé dans une seconde chambre 7 au-dessus et parallèle à la première chambre 8.

La première chambre 8 comprend à son embouchure vers l'extérieur une première grande lentille 18, alors que la seconde chambre 7 comprend également à son embouchure vers l'extérieur une seconde grande lentille 17. Ces grandes lentilles 17, 18 sont prévues pour mettre en forme le faisceau de lumière transmis Le et le faisceau de lumière réfléchi Lᵣ. De préférence, les première et seconde grandes lentilles 17, 18 sont placées l'une au-dessus de l'autre dans un même plan. Le diamètre de chaque lentille peut être de l'ordre de 30 mm légèrement inférieur à la largeur d3 ou d5 de chaque chambre 7, 8. Les lentilles peuvent être des lentilles Thorlabs LAB1134 (fb=56.9 mm). La portion de couverture 21 du boîtier s'étend au-delà de chaque embouchure des grandes lentilles pour protéger notamment le capteur de lumière 3 de la lumière du soleil ou de projecteurs. Cette portion de couverture permet également de protéger les lentilles 17, 18 de la pluie ou d'une chute de neige.

Un filtre optique 5 est disposé dans la seconde chambre 7 entre la seconde grande lentille 17 et le capteur de lumière 3. Ce filtre optique peut être simplement une plaque opaque munie d'un seul trou ou d'une seule ouverture 6 de forme générale carrée ou circulaire. La dimension d0 de cette ouverture 6 peut être par exemple choisie de l'ordre de 1.6 mm par côté dans le cas d'une forme carrée ou de diamètre inférieur à 2 mm dans le cas d'une forme circulaire. Cette plaque à trou est généralement disposée perpendiculaire à l'axe longitudinal A de la seconde chambre 7 avec l'ouverture 6 centrée sur ledit axe longitudinal A ou en léger décalage. Le trou ou ouverture 6 est positionné également en regard de la partie de réception du capteur de lumière 3.

Le capteur de lumière 3 peut être une cellule photovoltaïque susceptible de convertir la lumière captée en un signal électrique. Cette cellule photovoltaïque 3 peut se trouver aussi sur l'axe longitudinal A de la seconde chambre 7. Le signal électrique du capteur de lumière, qui est fourni à une unité de traitement, varie en fonction de l'interruption de réception de la lumière par le capteur de lumière 3 suite au passage d'un concurrent entre le boîtier et le rétro-réflecteur. Cela permet de signaler par exemple un temps intermédiaire ou un temps final de la course selon l'emplacement du dispositif de contrôle.

La source de lumière peut être une diode électroluminescente ou laser 2 à émission d'un faisceau de lumière par exemple dans l'infrarouge. Cette diode LED peut être une diode OSRAM SFH 4258 d'épaisseur de l'ordre de 3.2 mm, qui est montée sur une plaque à circuit imprimé 4. Cette diode LED peut être centrée sur l'axe longitudinal A de la première chambre 8, qui peut correspondre à l'axe optique de la première grande lentille 18. Il peut en être de même pour la seconde chambre 7, où l'axe longitudinal A peut correspondre à l'axe optique de la seconde grande lentille 17.

La cellule photovoltaïque 3 est également montée sur une plaque à circuit imprimé, qui peut être la même plaque à circuit imprimé 4 de la source de lumière. Cette cellule photovoltaïque peut être une cellule OSRAM PBW 34 FAS d'épaisseur de l'ordre de 1.2 mm et de surface de photo-réception de lumière de 2 mm sur 2 mm par exemple. La plaque à circuit imprimé 4 est disposée sensiblement perpendiculaire par rapport à l'axe longitudinal A de chaque chambre 7 et 8 et ferme chaque chambre du côté intérieur du boîtier 10. Cette plaque à circuit imprimé peut être fixée à la paroi de séparation des deux chambres 7, 8. La distance d2 séparant la plaque 4 de la plaque à trou 5 peut être inférieur à 8 mm, de préférence de l'ordre de 7.6 mm, alors que la distance d4 séparant la plaque 4 à chaque grande lentille 17, 18 peut être de l'ordre de 60 mm. Les axes longitudinaux ou optiques A des deux chambres 7, 8 peuvent être séparés d'une distance d1 de l'ordre de 35 mm.

Il est à noter qu'il peut aussi être imaginé que la source de lumière 2 et/ou le capteur de lumière 3 avec le trou 6 de la plaque à trou 5 soient placés dans une autre position que sur l'axe longitudinal ou optique A de chaque chambre 7, 8. Cependant une meilleure émission vers l'extérieur du boîtier d'un faisceau de lumière Le par la source de lumière 2 est effectuée en centrant ladite source de lumière sur l'axe optique de la première grande lentille 18. Il en est de même pour le capteur de lumière 3 et du trou 6 de la plaque à trou 5 pour la réception par la seconde grande lentille 17 du faisceau de lumière réfléchi Lᵣ sur le rétro-réflecteur. En outre, plus le trou 6 de la plaque à trou est dimensionné petit, et plus il est possible de détecter de petits objets à leur passage entre le boîtier et le rétro-réflecteur. Le trou 6 doit donc être dimensionné si possible pour ne pas détecter des objets ayant une largeur inférieure à 2 cm comme la largeur d'un bâton de ski.

L'intérieur de chaque chambre 17, 18, ainsi que la plaque à trou 5, qui est rigide et en matériau plastique ou métallique, peuvent être réalisés ou revêtus d'une couleur foncée, telle que noire, principalement dans la seconde chambre 7. Ceci permet d'absorber également toute lumière parasite, autre que le faisceau de lumière réfléchi Lᵣ à capter par la cellule photovoltaïque 3 à travers l'ouverture 6 de la plaque à trou 5. Ladite plaque à trou 5 peut être montée par exemple dans des rainures prévues dans la seconde chambre 7, ou être fixée par collage ou soudure, ou être montée déplaçable dans une direction selon l'axe longitudinal de la seconde chambre 7. A ce titre, il peut être prévu que la plaque à trou 5 soit guidée sur des rails dans la seconde chambre 7 et déplacée au moyen d'une vis sans fin, ce qui permet d'ajuster au mieux la distance d2 entre la plaque à trou 5 et la plaque à circuit imprimé 4 portant la cellule photovoltaïque 3.

La plaque à circuit imprimé 4 est reliée électriquement à une carte 14 munie également d'un circuit imprimé par l'intermédiaire d'un câble 16. La plaque à circuit imprimé 4 ou la carte à circuit imprimé 14 comprend une unité de traitement traditionnelle, qui comprend au moins un processeur, et au moins une mémoire de stockage de paramètres ou de données prélevées. Il peut être prévu également des moyens de transmission ou réception sans fil de données ou commandes pour une communication du dispositif de contrôle avec une station de base principale, qui gère le déroulement de la compétition sportive. Une alimentation électrique des composants électroniques peut être fournie au moyen d'un jeu de batteries 13 connectées à au moins deux bornes d'alimentation d'un compartiment spécifique en dessous des chambres 7 et 8. La carte à circuit imprimé 14 est reliée à une plaque de fermeture 22 de la structure principale 20 du boîtier 10. Différentes fiches ou différents connecteurs 15 sont fixés à la plaque de fermeture 22 en étant reliés à l'intérieur du boîtier à des pistes électriques de la carte à circuit imprimé 14, ce qui est bien connu. Une connexion par câble peut facilement être opérée par l'intermédiaire de ces fiches ou connecteurs 15 pour fournir des données de la mesure du temps de passage par exemple d'un concurrent de la compétition sportive.

Le dispositif de contrôle du passage d'un concurrent dans une compétition sportive permet ainsi d'éviter de détecter tout objet diffusant ou réfléchissant de la lumière à proximité du boîtier grâce au filtre optique sous la forme de la plaque à trou 5 selon la présente invention. Pour bien comprendre, l'effet du trou ou de l'ouverture 6 de la plaque à trou 5, il peut être décrit de quelle manière la lumière est réfléchie par le rétro-réflecteur ou par un objet diffusant. Dans le cas du retro-réflecteur, la lumière Le est réfléchie de manière presque spéculaire, c'est-à-dire sans diffusion, et les rayons de lumière reviennent sur leur chemin parallèlement à l'axe du dispositif. Par contre, dans le cas d'un objet diffusant, les rayons lumineux repartent dans différentes directions, où chacune forme un angle avec l'axe du dispositif.

Dans le domaine de l'optique, ces angles sont associés à des fréquences spatiales. Plus l'angle est grand, plus la fréquence associée est grande. La fréquence zéro correspond à un rayon qui se propage parallèlement à l'axe du dispositif. Un objet diffusant génère donc un spectre de fréquences plus au moins large et son énergie lumineuse est distribuée dans les différentes directions au détriment de l'énergie dans la fréquence zéro. Si la cellule photovoltaïque 3 est bien optimisée pour ne détecter que la fréquence zéro, le faisceau de lumière détecté en présence d'un objet diffusant est pénalisant par rapport au faisceau de lumière réfléchi Lᵣ du retro-réflecteur. Avec la plaque à trou 5 disposée à une distance d2 de la plaque à circuit imprimé 4 portant la cellule photovoltaïque 3, cela permet ainsi de filtrer les hautes fréquences optiques passant par la seconde grande lentille 17. Pour toute lumière parasite entrant par la seconde grande lentille 17 ayant un angle d'entrée de 1.5° ou supérieur, le capteur de lumière 3 ne la détecte pas grâce à la plaque à trou 5. Par contre pour le faisceau de lumière Lᵣ réfléchi par le rétro-réflecteur, le capteur de lumière 3 capte toute l'énergie du faisceau de lumière.

Il est encore à noter que le plan focal de la seconde grande lentille 17 se trouve de préférence entre la plaque à trou 5 et le capteur de lumière 3. Le dispositif ne focalise pas directement sur le capteur pour éviter des phénomènes de saturation. Après avoir passé le plan focal, la lumière du faisceau diverge de nouveau et toute la surface du capteur capte ladite lumière avec une densité d'énergie plus faible. Cette configuration permet de détecter un maximum de lumière sans risque de saturation. Cependant, il peut aussi être prévu un plus petit capteur de lumière disposé directement dans le plan focal pour ne pas détecter les plus hautes fréquences, qui sont en dehors de la surface active. Dans ce cas par contre, il y a un risque d'avoir des phénomènes de saturation, car toute l'énergie lumineuse serait concentrée dans un spot de quelques fractions de millimètre. De plus, la tolérance de positionnement du capteur de lumière 3 sur la plaque à circuit imprimé 4 devient beaucoup plus stricte qu'avec un capteur de plus grande surface placé plus loin que le plan focal.

A partir de la description qui vient d'être faite, plusieurs variantes du dispositif de contrôle du passage d'un concurrent dans une compétition sportive peuvent être conçues par l'homme du métier sans sortir du cadre de l'invention définie par les revendications. Le filtre optique sous forme de plaque à trou peut comprendre plusieurs trous de dimension adaptée en regard d'un ou plusieurs capteurs de lumière dans la même chambre de réception. Les grandes lentilles peuvent ne pas être disposées dans un même plan. Plusieurs lentilles pour chaque chambre peuvent également être prévues. La source de lumière et le capteur de lumière peuvent être disposés dans deux boîtiers différents.

## Revendications

1. Dispositif (1) de contrôle du passage d'un concurrent dans une compétition sportive, ledit dispositif comprenant au moins une source de lumière (2) pour transmettre un faisceau de lumière (Le) en direction d'un rétro-réflecteur (11), et un capteur de lumière (3) pour recevoir le faisceau de lumière (Lᵣ) réfléchi sur le rétro-réflecteur, afin de le convertir en un signal électrique, qui varie lors du passage du concurrent entre le capteur de lumière et le rétro-réflecteur, **caractérisé en ce qu'**il comprend un filtre optique sous la forme d'une plaque à au moins un trou (5) placée à proximité du capteur de lumière, et dont le trou (6) de la plaque est disposé en regard d'au moins une partie d'une surface de photo-réception du capteur de lumière pour ne laisser passer que le faisceau de lumière réfléchi sur le rétro-réflecteur, afin d'éviter de capter toute lumière parasite diffusée ou réfléchie par un objet diffusant ou réfléchissant.

2. Dispositif (1) selon la revendication 1, **caractérisé en ce que** la source de lumière (2) est montée dans une première chambre (8) d'un boîtier (10) du dispositif, et **en ce que** le capteur de lumière (3) est monté dans une seconde chambre (7) du boîtier du dispositif.

3. Dispositif (1) selon la revendication 2, **caractérisé en ce que** les deux chambres (7, 8) sont disposées parallèlement l'une au-dessus de l'autre.

4. Dispositif (1) selon la revendication 2, **caractérisé en ce que** la première chambre (8) du boîtier (10) comprend à son embouchure vers l'extérieur une première grande lentille (18), et **en ce que** la seconde chambre (7) comprend à son embouchure vers l'extérieur une seconde grande lentille (17).

5. Dispositif (1) selon la revendication 4, **caractérisé en ce que** la plaque à trou (5), qui est opaque, est montée dans la seconde chambre entre la seconde grande lentille (17) et le capteur de lumière (3), en étant plus proche du capteur de lumière que de la seconde grande lentille.

6. Dispositif (1) selon la revendication 4, **caractérisé en ce que** le capteur de lumière est une cellule photovoltaïque (3), qui est montée sur une plaque à circuit imprimé (4) fermant la seconde chambre (7) d'un côté opposé à la seconde grande lentille (17).

7. Dispositif (1) selon la revendication 6, **caractérisé en ce que** la source de lumière est une diode électroluminescente ou une diode laser (2), qui est montée sur la plaque à circuit imprimé (4), qui ferme la première chambre (8) d'un côté opposé à la première grande lentille (18).

8. Dispositif (1) selon la revendication 4, **caractérisé en ce que** les deux grandes lentilles (17, 18) sont positionnées dans un même plan.

9. Dispositif (1) selon la revendication 4, **caractérisé en ce que** la source de lumière (2) est disposée le long de l'axe longitudinal de la première chambre (8).

10. Dispositif (1) selon la revendication 4, **caractérisé en ce que** le capteur de lumière (3) est disposé le long de l'axe longitudinal (A) de la seconde chambre (7).

11. Dispositif (1) selon l'une des revendications 9 et 10, **caractérisé en ce que** l'axe longitudinal (A) de chaque chambre (7, 8) correspond à l'axe optique de chaque lentille (17, 18).

12. Dispositif (1) selon la revendication 1, **caractérisé en ce que** le trou (6) de la plaque à trou (5) est de forme générale carrée ou circulaire, et **en ce que** la dimension du trou est inférieure ou égale à la surface de photo-réception du capteur de lumière (3).

13. Dispositif (1) selon la revendication 12, **caractérisé en ce que** le trou (6) est de 1.6 mm par côté pour un trou d'une forme carrée ou de diamètre inférieur ou égal à 2 mm pour un trou d'une forme circulaire.

14. Dispositif (1) selon la revendication 4, **caractérisé en ce que** le plan focal de la seconde grande lentille (17) se trouve entre la plaque à trou (5) et la surface de photo-réception du capteur de lumière (3) avec le trou et le capteur disposé le long de l'axe longitudinal de la seconde chambre (7), qui correspond à l'axe optique de la seconde grande lentille (17).

15. Dispositif (1) selon la revendication 5, **caractérisé en ce que** l'intérieur de la seconde chambre (7), ainsi que la plaque à trou (5) est d'une couleur foncée, de préférence de couleur noire.
